# FASCICULE DE BREVET EUROPEEN

(11) **EP 4 085 206 B1**
(45) Date de publication et mention de la délivrance du brevet: **05.08.2026**
(21) Numéro de dépôt: 20838938.7
(22) Date de dépôt: 16.12.2020
(51) Int. Cl.: F16F 15/123

(54) **DISPOSITIF D'AMORTISSEMENT DE TORSION**
DREHSCHWINGUNGSDÄMPFER
TORSIONAL VIBRATION DAMPER

(30) Priorité: 31.12.2019 FR 1915801
(43) Date de publication de la demande: 09.11.2022
(73) Titulaire: VALEO EMBRAYAGES, 80009 Amiens (FR)
(72) Inventeur: FAFET, Olivier, 95892 CERGY PONTOISE (FR); VIGREUX, Antoine, 95892 CERGY PONTOISE (FR); MALLEY, Matthieu, 95892 CERGY PONTOISE (FR)
(74) Mandataire: Valeo Powertrain Systems
(86) Numéro de dépôt international: PCT/EP2020/086558
(87) Numéro de publication internationale: WO 2021/136668

(56) Documents cités:
- WO-A1-2019/058057
- DE-A1- 102012 215 829
- FR-A1- 2 685 418
- US-A- 4 279 132
- US-A- 5 657 845

## Description

L'invention a trait au domaine de la transmission de couple dans les dispositifs motorisés et concerne un dispositif d'amortissement de torsion pour une chaine de transmission de véhicule.

Les véhicules motorisés comportent généralement de tels dispositifs d'amortissement de torsion qui peuvent être intégrés dans divers éléments de la chaine de transmission. Par exemple, un volant moteur à double volant amortisseur, un disque d'embrayage, ou un limiteur de couple, peuvent inclure un dispositif d'amortissement de torsion permettant le filtrage des acyclismes du moteur et autres oscillations de torsion. Ce filtrage est typiquement réalisé par un ou plusieurs amortisseurs de torsion qui sont des combinés ressorts-amortisseurs travaillant en torsion et permettant, au cours de la transmission du couple, un mouvement de rotation relative d'un premier élément tournant de transmission d'un couple, couplé en amont de la chaine de transmission, et d'un deuxième élément tournant de transmission du couple, couplé en aval de la chaine de transmission. La rotation relative peut être permise par des ressorts agencés en série. Lors du passage du couple, et notamment lorsque le débattement est proche de 0°, il y a un transfert de la portance de ces ressorts, permettant leur compression, entre le premier élément tournant de transmission de couple et le deuxième élément tournant de transmission de couple. Ce transfert provoque des mouvements relatifs et donc, sous l'effet des efforts centrifuges, des frottements radiaux qui peuvent endommager les ressorts et qui dégradent fortement la performance en filtration du dispositif d'amortissement. En outre, ces transferts de portance sont source de bruit.

Les documents US 5567845 A et US 4279132 A divulguent respectivement un dispositif d'amortissement de torsion pour une chaîne de transmission de véhicule.

L'invention a pour but d'améliorer les dispositifs d'amortissement de torsion de l'art antérieur en proposant un tel dispositif insensible aux forces centrifuges.

A cet effet, l'invention vise un dispositif d'amortissement de torsion pour une chaine de transmission de véhicule, comprenant :
- un premier élément tournant de transmission d'un couple doté d'un premier logement, le premier logement présentant une première zone d'appui et une deuxième zone d'appui opposée,
- un deuxième élément tournant de transmission du couple,
- un dispositif élastique interposé entre le premier élément tournant et le deuxième élément tournant, et autorisant, lorsqu'il se déforme, une rotation relative autour d'un axe de rotation entre les premier et deuxième éléments tournants, le dispositif élastique comprenant au moins un premier ressort monté dans le premier logement, le premier ressort comprenant une première extrémité et une deuxième extrémité opposée, le premier élément tournant étant mobile entre une position de repos, dans laquelle aucun ressort du dispositif élastique n'est comprimé, et une position active dans laquelle l'au moins un ressort du dispositif élastique est comprimé,
- une première bride comprenant une première patte de compression agencée circonférentiellement entre la première extrémité du premier ressort et le premier élément tournant,
- une deuxième bride comprenant une première patte de compression agencée circonférentiellement entre la deuxième extrémité du premier ressort et le premier élément tournant,

dans lequel le premier élément tournant déplace la première extrémité du premier ressort vers la deuxième extrémité du premier ressort, via la première patte de compression de la première bride, lorsque ledit premier élément tournant est mobile en rotation dans le sens direct depuis la position de repos,
et dans lequel le premier élément tournant déplace la deuxième extrémité du premier ressort vers la première extrémité du premier ressort, via la première patte de compression de la deuxième bride, lorsque ledit premier élément tournant est mobile en rotation dans le sens indirect depuis la position de repos, la première patte de compression de la première bride étant en appui contre la première zone d'appui du premier logement dans la position de repos.

Ainsi, la suppression du transfert de la portance lors de la transmission de couple permet de réduire l'usure du ressort, ou des pièces en contact avec ledit ressort, et les bruits lors du fonctionnement du dispositif. La suppression du transfert de la portance permet en outre de réduire, voire de supprimer, les frottements radiaux afin d'obtenir une performance d'amortissement optimale. La présence d'une première et d'une deuxième bride guidant le ressort permet au premier et au deuxième élément tournant de transmette uniquement le couple sans retenir le ressort, ou tout élément intermédiaire entre le premier élément tournant et l'au moins un ressort. Cela permet notamment de standardiser le premier élément tournant. Cela permet également de renforcer la résistance dudit premier élément tournant.

En outre, la première bride et la deuxième bride n'opposent pas de réaction à la transmission du passage de couple. Ainsi, le dimensionnement desdites brides est plus simple à réaliser et ces dernières sont moins chères à fabriquer.

Le sens direct est le sens direct trigonométrique, encore appelé sens anti-horaire. Le sens indirect est le sens indirect trigonométrique, encore appelé sens horaire. Le sens direct est opposé au sens indirect.

Le dispositif d'amortissement de torsion peut comporter les caractéristiques additionnelles suivantes, seules ou en combinaison.

La première patte de compression de la première bride comprend au moins un élément de maintien adapté pour maintenir radialement le premier ressort. L'élément de maintien est adapté pour maintenir radialement le ressort lorsque ce dernier est soumis à des efforts centrifuges. L'élément de maintien permet d'éviter la perte du ressort. L'élément de maintien facilite le déplacement de la première extrémité du premier ressort par la première bride lorsque le premier élément tournant est mobile dans le sens direct depuis la position de repos. L'élément de maintien est un téton s'étendant radialement depuis la première patte de compression en direction du premier ressort entre une extrémité solidaire de ladite première patte de compression et une extrémité libre. L'élément de maintien est un bord externe s'étendant radialement depuis une extrémité supérieure de la première patte de compression entre une extrémité solidaire de ladite première patte de compression et une extrémité libre. L'élément de maintien est un téton et un bord externe.

Le dispositif élastique comprend en outre un deuxième ressort monté dans le premier logement, le deuxième ressort comprenant une première extrémité et une deuxième extrémité opposée, la première patte de compression de la deuxième bride est agencée circonférentiellement entre la deuxième extrémité du deuxième ressort et le premier élément tournant, et le premier élément tournant déplace la deuxième extrémité du deuxième ressort vers la première extrémité du deuxième ressort, via la première patte de compression de la deuxième bride, lorsque ledit premier élément tournant est mobile en rotation dans le sens indirect depuis la position de repos.

Ainsi, l'augmentation du nombre de ressort du dispositif élastique permet d'augmenter les performance d'amortissement tout en maintenant les avantages cités précédemment.

Le premier ressort et le deuxième ressort sont agencés en série par l'intermédiaire d'un élément de phasage reliant la deuxième extrémité du premier ressort et la première extrémité du deuxième ressort.

Le premier élément tournant est doté d'un deuxième logement, le dispositif élastique comprend en outre un troisième ressort, opposé radialement au premier ressort, le troisième ressort étant monté dans le deuxième logement et comprenant une première extrémité et une deuxième extrémité opposée, la première bride et la deuxième bride comprennent chacun une deuxième patte de compression agencée circonférentiellement entre le premier élément tournant et, respectivement, la première extrémité du troisième ressort ou la deuxième extrémité du troisième ressort, le premier élément tournant déplace la première extrémité du troisième ressort vers la deuxième extrémité du troisième ressort, via la deuxième patte de compression de la première bride, lorsque ledit premier élément tournant est mobile en rotation dans le sens direct depuis la position de repos, et il déplace la deuxième extrémité du troisième ressort vers la première extrémité du troisième ressort, via la deuxième patte de compression de la deuxième bride, lorsque ledit premier élément tournant est mobile en rotation dans le sens indirect depuis la position de repos.

Ainsi, les ressorts sont diamétralement opposés deux à deux. Autrement dit, les ressorts sont alignés radialement deux à deux ou encore les ressorts sont opposés deux à deux par rapport à l'axe de rotation. Chacune des brides est ainsi reliée à la une extrémité de deux ressorts diamétralement opposés.

Cette configuration du dispositif permet, sous l'effet de la vitesse de rotation, que la première patte de compression et la deuxième patte de compression d'une même bride soient soumises à deux efforts centrifuges de la masse des ressorts. Ces deux efforts centrifuges sont de même valeur mais sont de directions opposées. Ainsi, les déformations liées à ces deux efforts centrifugent se compenses et il n'existe plus d'effort radial s'exerçant sur le premier élément tournant et/ou sur le deuxième élément tournant, même lors du passage de la rotation du premier élément tournant du sens direct au sens indirect ou inversement. Ainsi, l'équilibrage des forces centrifuges au seins du dispositif permet de supprimer les frottements, et donc la dégradation de la performance de filtration lié à ces derniers. Le dispositif devient insensible aux effets négatifs des forces centrifuges.

Le premier élément tournant est doté d'un deuxième logement, le deuxième logement présentant une première zone d'appui et une deuxième zone d'appui opposée,
le dispositif élastique comprend en outre un troisième ressort, opposé radialement au premier ressort, et un quatrième ressort, opposé radialement au deuxième ressort, les troisième et quatrième ressorts étant montés dans le deuxième logement et comprenant chacun une première extrémité et une deuxième extrémité opposée,
la première bride et la deuxième bride comprennent chacun une deuxième patte de compression agencée circonférentiellement entre le premier élément tournant et, respectivement, la première extrémité du troisième ressort ou la deuxième extrémité du quatrième ressort,
le premier élément tournant déplace la première extrémité du troisième ressort vers la deuxième extrémité du troisième ressort, via la deuxième patte de compression de la première bride, lorsque ledit premier élément tournant est mobile en rotation dans le sens direct depuis la position de repos, et qu'il déplace la deuxième extrémité du quatrième ressort vers la première extrémité du quatrième ressort, via la deuxième patte de compression de la deuxième bride, lorsque ledit premier élément tournant est mobile en rotation dans le sens indirect depuis la position de repos, la deuxième patte de compression de la première bride étant en appui contre la première zone d'appui du deuxième logement dans la position de repos.

Ainsi, les ressorts sont diamétralement opposés deux à deux. Chacune des brides est ainsi reliée à la une extrémité de deux ressorts diamétralement opposés, par exemple le premier et le troisième ressort pour la première bride et le deuxième et le quatrième ressort pour la deuxième bride.

Cette configuration du dispositif permet, sous l'effet de la vitesse de rotation, que la première patte de compression et la deuxième patte de compression d'une même bride soient soumises à deux efforts centrifuges de la masse des ressorts. Ces deux efforts centrifuges sont de même valeur mais sont de directions opposées. Ainsi, les déformations liées à ces deux efforts centrifugent se compenses et il n'existe plus d'effort radial s'exerçant sur le premier élément tournant et/ou sur le deuxième élément tournant, même lors du passage de la rotation du premier élément tournant du sens direct au sens indirect ou versement. Ainsi, l'équilibrage des forces centrifuges au seins du dispositif permet de supprimer les frottements, et donc la dégradation de la performance de filtration lié à ces derniers. Le dispositif devient insensible aux effets négatifs des forces centrifuges.

La première bride est mobile dans le sens direct entre une position initiale prédéterminée, dans laquelle la première bride ne comprime pas le premier ressort, et une position de fin de course, dans laquelle la première bride comprime le premier ressort. Ce déplacement est la course prédéterminée de la première bride. La deuxième bride est mobile dans le sens indirect entre une position initiale prédéterminée, dans laquelle la deuxième bride ne comprime pas le deuxième ressort, et une position de fin de course, dans laquelle la deuxième bride comprime le deuxième ressort. Ce déplacement est la course prédéterminée de la deuxième bride.

Le deuxième élément tournant comprend une butée circonférentielle, ou la première patte de compression de la première bride et la deuxième patte de compression de la deuxième bride comprenne chacune une butée, la ou lesdites butées étant respectivement adaptées pour interdire le mouvement de la première bride dans le sens indirect au-delà d'une position initiale prédéterminée et pour interdire le mouvement de la deuxième bride dans le sens direct au-delà d'une position initiale prédéterminé.

Ainsi, lorsque le deuxième élément tournant comprend la butée, celle-ci permet à la fois que la première bride et la deuxième bride n'aillent pas au-delà de leur course prédéterminée, à savoir entre leur position initiale prédéterminée et leur position de fin de course, en les stoppant. La butée est un élément de fin de course.

La butée est située circonférentiellement entre la première patte de compression de la première bride et la deuxième patte de compression de la deuxième bride.

Le deuxième élément tournant comprend deux butées. La première butée est adaptée pour bloquer la course de la première patte de compression de la première bride et pour bloquer la course de la deuxième patte de compression de la deuxième bride au-delà de leur course prédéterminée. La deuxième butée est adaptée pour bloquer la course de la deuxième patte de compression de la première bride et la course de la première patte de compression de la deuxième bride au-delà de leur course prédéterminée. Le contrôle de la course des première et deuxième brides est amélioré.

La butée est un embouti pratiqué dans le deuxième élément tournant. Ainsi, la butée est de conception simple, peu couteuse, et de faible encombrement.

Lorsque la première patte de compression de la première bride et la deuxième patte de compression de la deuxième bride comprenne chacune une butée, la butée de la première patte de compression de la première bride permet que la première bride n'aille pas au-delà de sa course prédéterminée, à savoir entre sa position initiale prédéterminée et sa position de fin de course, en stoppant le mouvement de ladite première bride dans le sens indirect, et la butée de la première patte de compression de la deuxième bride permet que la deuxième bride n'aille pas au-delà de sa course prédéterminée, à savoir entre sa position initiale prédéterminée et sa position de fin de course, en stoppant le mouvement de ladite deuxième bride dans le sens direct. Les butées sont des éléments de fin de course.

La deuxième patte de compression de la première bride et de la deuxième bride comprenne chacune une butée. Les butées des première et deuxième pattes de compression de la première bride sont adaptées pour bloquer la course de la première bride au-delà de sa course prédéterminée. Les butées des première et deuxième pattes de compression de la deuxième bride sont adaptées pour bloquer la course de la première bride au-delà de sa course prédéterminée. Le contrôle de la course des première et deuxième brides est amélioré.

Les butées sont chacune un épaulement pratiqué respectivement sur la première patte de la première bride et de la deuxième bride. Ainsi, les butées sont de conception simple, peu couteuse, et de faible encombrement.

La première bride et/ou la deuxième bride comprend un unique disque d'équilibrage monobloc mobile en rotation autour de l'axe de rotation et formant la première patte de compression. Ainsi, la première bride et/ou la deuxième bride est faite d'une seule pièce ce qui permet de réduire les coûts de fabrication et de faciliter le montage du dispositif.

La première patte de compression présente une forme en en U incliné. Cette forme est également appelée en coin de valise. La forme comprend une paroi principale, et deux parois latérales radiales à la paroi principale. La forme en U incliné de la première patte de compression est réalisée par un embouti. La forme en U incliné de la première patte de compression permet d'assurer une bonne interface avec les ressorts.

La deuxième patte de compression présente la même forme que la première patte de compression.

La première bride et/ou la deuxième bride comprend un unique disque d'équilibrage mobile en rotation autour de l'axe de rotation et un embout, solidaire dudit unique disque d'équilibrage, formant la première patte de compression. L'unique disque d'équilibrage est réalisé en métal. L'embout est réalisé en plastique et est surmoulé sur l'unique disque d'équilibrage. Ainsi, la première bride et/ou la deuxième bride est faite en un nombre limité de pièce ce qui permet d'en limiter le prix et d'adapter les différentes pièces à leur fonction.

La première bride et/ou la deuxième bride comprend un deuxième embout solidaire de l'unique disque d'équilibrage et formant la deuxième patte de compression.

La première bride et la deuxième bride sont situées axialement de part et d'autre du premier élément tournant. Autrement dit, le premier élément tournant est intercalé axialement entre la première bride et la deuxième bride. L'encombrement axial du dispositif est ainsi optimisé.

La première bride et/ou la deuxième bride comprend un premier disque d'équilibrage, un deuxième disque d'équilibrage, solidaire en rotation du premier disque d'équilibrage, et un embout formant la première patte de compression.

Le premier disque d'équilibrage est riveté au deuxième disque d'équilibrage. Ainsi, le moyen de liaison permettant de solidariser entre eux les deux disques d'équilibrage est robuste et facilement réalisable.

Le premier disque d'équilibrage et le deuxième disque d'équilibrage sont mobile en rotation autour de l'axe de rotation.

Le premier disque d'équilibrage et le deuxième disque d'équilibrage sont strictement identiques. Ainsi, une seule référence est nécessaire ce qui réduit les coûts de fabrication.

Le premier disque d'équilibrage et/ou le deuxième disque d'équilibrage est une tôle emboutie.

La première bride et/ou la deuxième bride comprend un deuxième embouti formant la deuxième patte de compression. Le deuxième emboutis est identique au premier embouti. Ainsi, une seule référence est nécessaire ce qui réduit les coûts de fabrication.

Le premier disque d'équilibrage de la première bride et le premier disque d'équilibrage de la deuxième bride sont situées axialement d'un côté du premier élément tournant, et le deuxième disque d'équilibrage de la première bride et le deuxième disque d'équilibrage de la deuxième bride sont situées axialement de l'autre côté du premier élément tournant. Ainsi, les brides présentent une excellente tenue mécanique.

L'un parmi le premier élément tournant et le deuxième élément tournant est couplé en rotation à un moyeu, la première bride et/ou la deuxième bride étant guidée en rotation par ledit moyeu.

Le dispositif comprend en outre un système de frottement comprenant une rondelle de frottement, agencée pour frotter directement ou indirectement contre le premier ou le deuxième élément tournant, et entraînée en rotation par la première ou la deuxième bride.

Ainsi, le système de frottement permet de faire un frottement différencier entre le sens direct et le sens indirect.

La rondelle de frottement est agencée pour frotter directement ou indirectement contre le deuxième élément tournant et le système de frottement comprend en outre une rondelle d'actionnement dotée d'un doigt axial coopérant avec une encoche de la rondelle de frottement pour assurer l'entrainement de la rondelle de frottement par la rondelle d'actionnement lorsque la deuxième bride est mobile en rotation.

Ces frottements étant particulièrement important dans le sens indirect, notamment lors du démarrage pour les véhicule hybride, le système de frottement est particulièrement efficace dans ce dernier sens. Le système de frottement présente moins de pièce et est plus robuste.

Le système de frottement comprend en outre un support axial solidaire en rotation du deuxième élément tournant et une rondelle élastique agencée entre le support axial et la rondelle de frottement de manière à exercer un effort axial sur la rondelle de frottement en direction du deuxième élément tournant.

L'invention a enfin pour objet, selon un autre de ses aspects, un groupe motopropulseur de véhicule comprenant : un moteur thermique et/ou un moteur électrique de propulsion du véhicule, et un dispositif d'amortissement de torsion selon l'invention.

Dans la description et les revendications, les termes « comprimé » ou « compression », d'une part, et « précontraint » ou « précontrainte » d'autre part, lorsqu'ils se réfèrent aux ressorts, sont employés comme suit :
- la précontrainte d'un ressort désigne le fait que ce ressort est monté dans un logement qui sont plus petits que la longueur initiale du ressort, ce dernier exerçant donc, par son élasticité, une force contre au moins une des parois du logement ;
- la compression d'un ressort désigne le fait que ce ressort est comprimé par rapprochement de deux parties mobiles.

La précontrainte d'un ressort est donc effective même lorsque le dispositif d'amortissement de torsion est au repos, sans qu'aucun couple ne soit transmis. La compression d'un ressort, elle, n'a lieu qu'en cours de transmission de couple, des parties mobiles les unes par rapport aux autres, modifient la configuration du logement du ressort et compriment celui-ci.

Par « véhicule», on entend les véhicules automobiles, qui comprennent non seulement les véhicules passagers mais également les véhicules industriels, ce qui comprend notamment les poids lourds, les véhicules de transport en commun ou les véhicules agricoles, mais également tout engin de transport permettant de faire passer d'un point à un autre un être vivant et/ou un objet.

Un exemple préféré de réalisation de l'invention va maintenant être décrit en références aux dessins annexés dans lesquels :
[Fig. 1] est une vue éclatée d'un dispositif d'amortissement de torsion selon l'invention ;
[Fig. 2] est une vue partielle en perspective du dispositif d'amortissement de torsion, la première bride et la deuxième bride étant dans leur position initiale prédéterminée;
[Fig. 3] est une vue partielle en perspective du dispositif d'amortissement de torsion, la première bride étant dans la position de fin de course;
[Fig. 4] est une vue partielle en perspective du dispositif d'amortissement de torsion, la deuxième bride étant dans la position de fin de course;
[Fig. 5] est une vue partielle en coupe du dispositif d'amortissement de torsion, comprenant un système de frottement;
[Fig. 6] est une vue partielle en perspective du dispositif d'amortissement de torsion, comprenant une butée;
[Fig. 7] est une vue en perspective d'une première variante de réalisation d'une bride;

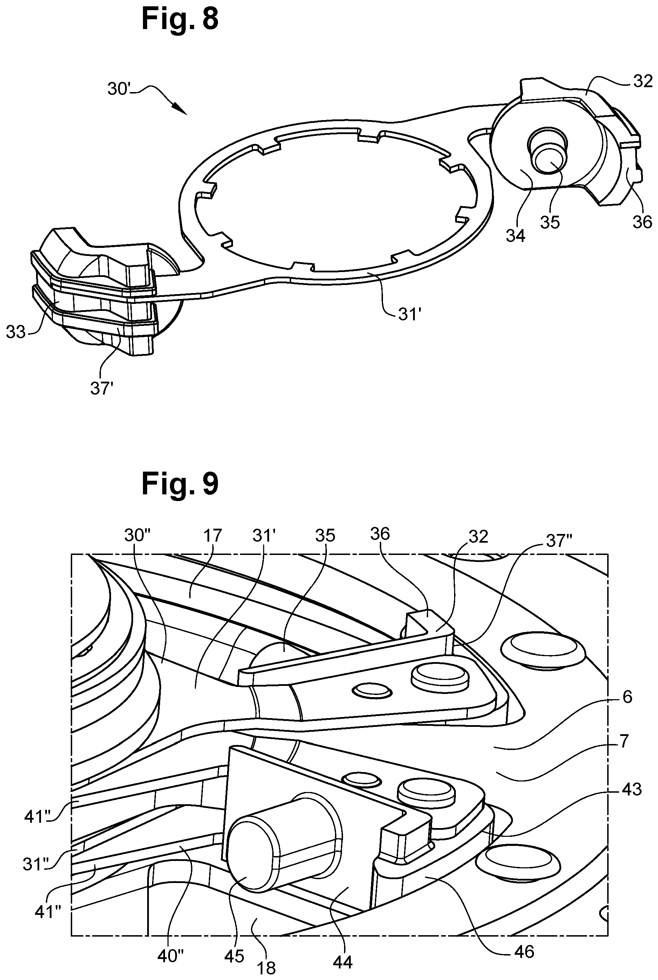

[Fig. 8] est une vue en perspective d'une deuxième variante de réalisation d'une bride;
[Fig. 9] est une vue partielle en perspective du dispositif d'amortissement de torsion, comprenant une bride selon une troisième variante de réalisation;

Dans la description et les revendications, on utilisera, les termes "externe" et "interne" ainsi que les orientations "axiale" et "radiale" pour désigner, selon les définitions données dans la description, des éléments du dispositif d'amortissement. L'axe de rotation X détermine l'orientation "axiale". L'orientation "radiale" est dirigée orthogonalement à l'axe de rotation X. L'orientation "circonférentielle" est dirigée orthogonalement à l'axe de rotation X et orthogonalement à la direction radiale. Les termes "externe" et "interne" sont utilisés pour définir la position relative d'un composant par rapport à un autre, par référence à l'axe de rotation X, un composant proche dudit axe est ainsi qualifié d'interne par opposition à un composant externe situé radialement en périphérie. Par ailleurs, les angles et secteurs angulaires exprimés sont définis en relation avec l'axe de rotation X.

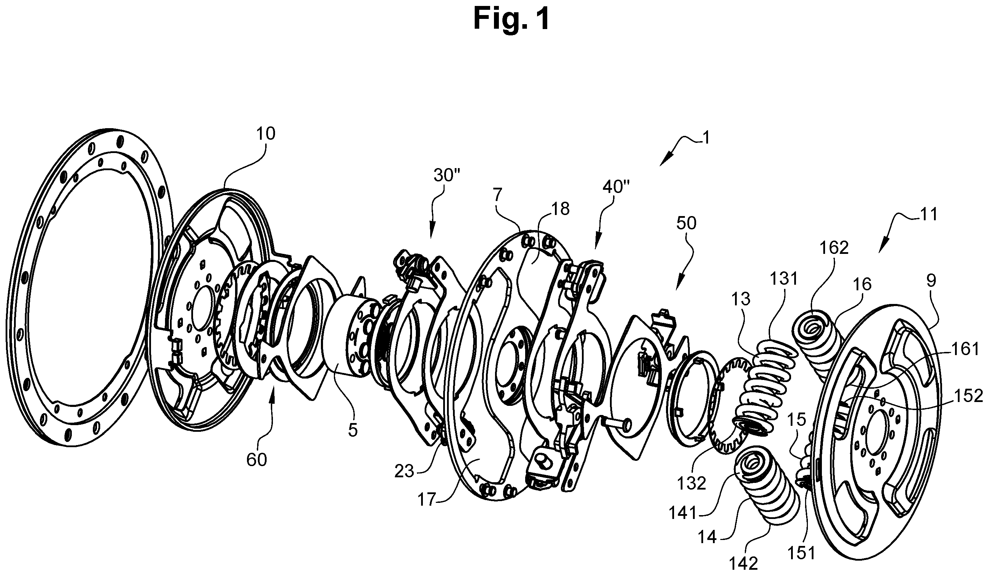

La figure 1 représente un dispositif 1 d'amortissement de torsion.

Le dispositif 1 d'amortissement peut comprendre un organe périphérique de transmission de couple et un organe central de transmission de couple constitué ici d'un moyeu 5.

L'organe périphérique de transmission de couple peut, par exemple, être un disque de friction d'un limiteur de couple (non représenté) destiné, en fonctionnement normal, à transmettre un couple en tournant autour d'un axe de rotation X et à limiter cette transmission lorsque ce couple excède une certaine valeur.

L'organe périphérique de transmission de couple peut être fixé, par exemple par un premier jeu de rivets, à un premier élément tournant de transmission de couple qui est ici constitué par un disque dénommé « voile » 7. Le voile 7 peut être compris par le dispositif 1.

Le moyeu 5 peut être fixé par un deuxième jeu de rivets 2 à un deuxième élément tournant de transmission de couple qui est ici constitué par une paire de disques dénommés « rondelles de guidage » 9, 10. Les rondelles de guidage 9, 10 peuvent former un couvercle pour le dispositif 1. Une première rondelle de guidage 9 est fixée contre un flanc du moyeu 5 tandis qu'une deuxième rondelle de guidage 10 est fixée contre un flanc opposé du moyeu 5. Les rondelles de guidage 9, 10 peuvent être comprises par le dispositif 1.

Les rôles du voile et des rondelles de guidage peuvent être inversés, le voile devenant le deuxième élément tournant et les rondelles de guidage devenant le premier élément tournant.

Le dispositif 1 d'amortissement comporte un dispositif élastique 11 d'amortissement intercalé entre le voile 7 et les rondelles de guidage 9, 10. Le dispositif élastique 11 est adapté pour que le voile 7 d'une part, et les rondelles de guidage 9, 10 d'autre part, puissent tourner l'un par rapport à l'autre en comprimant le dispositif élastique 11.

Le dispositif 1 d'amortissement est destiné à être monté dans une chaine de transmission de couple, par exemple entre un moteur et les roues d'un véhicule. L'organe périphérique de transmission de couple peut être pressé au moyen d'un disque de pression chargé élastiquement, contre un disque d'appui monté solidaire d'un volant moteur. Le moyeu 5 peut être raccordé à un arbre de transmission. L'élément moteur entraine en rotation l'organe périphérique de transmission de couple et donc le voile 7 qui lui est solidaire. Le voile 7 comprime le dispositif élastique 11, par l'intermédiaire de l'une parmi une première bride 30 et une deuxième bride 40, qui transmet le couple aux rondelles de guidage 9, 10 et donc au moyeu 5 qui lui est solidaire, par l'intermédiaire de l'autre parmi la première bride 30 et la deuxième bride 40. En transmettant le couple entre le voile 7 et les rondelles de guidage 9, 10, le dispositif élastique 11, par ses propriétés élastiques, filtre au passage les acyclismes et autres mouvements de torsion indésirables.

Le dispositif 1 peut fonctionner à sec ou dans un environnement en présence de graisse ou d'huile.

Le dispositif 1 d'amortissement comprend en outre une première butée de fin de course et une deuxième butée de fin de course complémentaire permettant que le couple soit directement transmis de l'organe périphérique de transmission de couple au moyeu 5, court-circuitant le dispositif élastique 11 au-delà d'un angle prédéterminé de rotation relative entre le voile 7 et les rondelles de guidage 9, 10.

La première butée de fin de course est ici constituée de dents externes disposées sur le pourtour du moyeu 5 et la deuxième butée de fin de course complémentaire est ici constituée de dents internes 4 au centre du voile 7.

Le dispositif élastique 11 d'amortissement comprend un premier ressort 13. Le premier ressort 13 peut être droit. Alternativement, le premier ressort 13 peut être courbe.

Le dispositif élastique 11 d'amortissement peut en outre comprendre un troisième ressort 15. Le troisième ressort 15 peut être droit. Alternativement, troisième ressort 15 peut être courbe. Le premier ressort 13 peut être diamétralement opposé, par rapport à l'axe de rotation X, au troisième ressort 15.

Le premier ressort 13 s'étend entre une première extrémité 131 et une deuxième extrémité 132. Le troisième ressort 15 s'étend entre une première extrémité 151 et une deuxième extrémité 152.

Le voile 7 comprend une première ouverture définissant un premier logement 17. Le premier ressort 13 peut être monté dans le premier logement 17. Le voile 7 peut en outre comprendre une deuxième ouverture définissant un deuxième logement 18. Le troisième ressort 15 peut être monté dans le deuxième logement 18.

Chacun des logements 17, 18 du voile 7 présente une première zone d'appui 19 et une deuxième zone d'appui 20 opposée.

Le voile 7 comprend deux bras 6 diamétralement opposés. Chacun des bras 6 peut former une séparation entre le premier logement 17 et le deuxième logement 18. Les ressorts 13, 15 sont montés entre les bras 6.

Les rondelles de guidage 9, 10 comportent chacune des ouvertures 12 pour permettre le montage des ressorts 13, 15. Les bords desdites ouvertures sont à distance des ressorts 13, 15.

Les fonctions du dispositif élastique 11 peuvent être assurées par un seul ressort ou par un nombre quelconque de ressorts, éventuellement en série ou en parallèle.

Le voile 7 peut être mobile en rotation entre une position de repos, dans laquelle aucun ressort 13, 15 du dispositif élastique 11 n'est comprimé, et une position active dans laquelle les ressorts 13, 15 du dispositif élastique 11 sont comprimés.

Le dispositif 1 comprend en outre la première bride 30 et la deuxième bride 40.

La première bride 30 et la deuxième bride 40 peuvent être mobile en rotation autour de l'axe de rotation X. La première bride 30 et la deuxième bride 40 peuvent être guidées par le moyeu 5. La première bride 30 et la deuxième bride 40 peuvent être montées de part et d'autre axialement du voile 7.

La première bride 30 peut être centrée radialement directement sur les rondelles de guidage 9, 10 ou le voile 7. Alternativement, la première bride 30 peut être centrée radialement indirectement sur les rondelles de guidage 9, 10 ou le voile 7.

La deuxième bride 40 peut être centrée radialement directement sur les rondelles de guidage 9, 10 ou le voile 7. Alternativement, la deuxième bride 40 peut être centrée radialement indirectement sur les rondelles de guidage 9, 10 ou le voile 7.

La première bride 30 comprend au moins un disque d'équilibrage 31, une première patte de compression 32 et une deuxième patte de compression 33.

Le disque d'équilibrage 31 peut être une tôle emboutie.

La première patte de compression 32 et la deuxième patte de compression 33 peuvent chacune comprendre une face d'appui 34 adapté pour recevoir en appui l'une des extrémités d'un des ressorts 13, 15. La première patte de compression 32 et la deuxième patte de compression 33 peuvent en outre chacune comprendre un téton 35 s'étendant radialement depuis la face d'appui 34 entre une extrémité solidaire de ladite face d'appui et une extrémité libre. Le téton 35 peut être un élément de maintien adapté pour maintenir radialement l'un des ressorts. Le téton 35 peut être adapté pour maintenir radialement l'un des ressorts lorsque ce dernier est soumis à des efforts centrifuges. Le téton 35 peut en outre être adapté pour retenir axialement un des ressorts 13, 15. La première patte de compression 32 et la deuxième patte de compression 33 peuvent en outre chacune comprendre un bord 36 externe s'étendant radialement depuis l'extrémité supérieure de la face d'appui 34 entre une extrémité solidaire de ladite face d'appui et une extrémité libre. Le bord 36 peut être un élément de maintien adapté pour maintenir radialement l'un des ressorts. Le bord 36 peut être adapté pour maintenir radialement l'un des ressorts lorsque ce dernier est soumis à des efforts centrifuges.

La première patte de compression 32 de la première bride 30 peut être agencée circonférentiellement entre la première extrémité 131 du premier ressort 13 et le voile 7. Plus particulièrement, la première patte de compression 32 de la première bride 30 peut être en appui contre la première zone d'appui 19 du premier logement 17 du voile 7 lorsque le dispositif 1 est dans un état de repos. Cet état de repos du dispositif 1 est un état dans lequel le voile 7 est dans une position de repos. La position de repos du voile 7 est une position dans laquelle le voile 7 est à distance des ressorts 13, 15. C'est-à-dire que le voile 7 ne comprime aucun des ressorts 13, 15. Cet état de repos du dispositif 1 est un état dans lequel la première bride 30 est dans la position initiale prédéterminée. La face d'appui 34 de la première patte de compression 32 de la première bride 30 peut être en appui contre la première extrémité 131 du premier ressort 13.

La deuxième patte de compression 33 de la première bride 30 peut être agencée circonférentiellement entre la première extrémité 151 du troisième ressort 15 et le voile 7. Plus particulièrement, la deuxième patte de compression 33 de la première bride 30 peut être en appui contre la première zone d'appui 19 du deuxième logement 18 du voile 7 lorsque le dispositif 1 est dans un état de repos. Dans cet état de repos du dispositif 1, la première bride 30 est dans la position initiale prédéterminée et le voile 7 est dans la position de repos. La face d'appui 34 de la deuxième patte de compression 33 de la première bride 30 peut être en appui contre la première extrémité 151 du troisième ressort 15.

Le disque d'équilibrage 31 mobile en rotation autour de l'axe de rotation X peut être unique. Le disque d'équilibrage 31 peut être monobloc. Le disque d'équilibrage 31 peut former la première patte de compression 32 et la deuxième patte de compression 33. La première patte de compression 32 et la deuxième patte de compression 33 peuvent présenter une forme en en U incliné. Cette forme est également appelée en coin de valise. La forme comprend une paroi principale, et deux parois latérales radiales à la paroi principale. L'une des parois latérales peut former le bord 36. La forme en U incliné de la première patte de compression est réalisée par un embouti.

La deuxième bride 40 comprend au moins un disque d'équilibrage 41, une première patte de compression 42 et une deuxième patte de compression 43.

Le disque d'équilibrage 41 peut être une tôle emboutie.

La première patte de compression 42 et la deuxième patte de compression 43 peuvent chacune comprendre une face d'appui 44 adapté pour recevoir en appui l'une des extrémités d'un des ressorts 13, 15. La première patte de compression 42 et la deuxième patte de compression 43 peuvent en outre chacune comprendre un téton 45 s'étendant radialement depuis la face d'appui 44 entre une extrémité solidaire de ladite face d'appui et une extrémité libre. Le téton 45 peut être un élément de maintien adapté pour maintenir radialement l'un des ressorts. Le téton 45 peut être adapté pour maintenir radialement l'un des ressorts lorsque ce dernier est soumis à des efforts centrifuges. Le téton 45 peut en outre être adapté pour retenir axialement un des ressorts 13, 15. La première patte de compression 42 et la deuxième patte de compression 43 peuvent en outre chacune comprendre un bord 46 externe s'étendant radialement depuis l'extrémité supérieure de la face d'appui 44 entre une extrémité solidaire de ladite face d'appui et une extrémité libre. Le bord 46 peut être un élément de maintien adapté pour maintenir radialement l'un des ressorts. Le bord 46 peut être adapté pour maintenir radialement l'un des ressorts lorsque ce dernier est soumis à des efforts centrifuges.

La première patte de compression 42 de la deuxième bride 40 peut être agencée circonférentiellement entre la deuxième extrémité 132 du premier ressort 13 et le voile 7. Plus particulièrement, la première patte de compression 42 de la deuxième bride 40 peut être en appui contre la deuxième zone d'appui 20 du premier logement 17 du voile 7 lorsque le dispositif 1 est dans un état de repos. Dans cet état de repos du dispositif 1, la deuxième bride 40 est dans la position initiale prédéterminée et le voile 7 est dans la position de repos. La face d'appui 44 de la première patte de compression 42 de la deuxième bride 40 peut être en appui contre la deuxième extrémité 132 du premier ressort 14.

La deuxième patte de compression 43 de la deuxième bride 40 peut être agencée circonférentiellement entre la deuxième extrémité 152 du troisième ressort 15 et le voile 7. Plus particulièrement, la deuxième patte de compression 43 de la deuxième bride 40 peut être en appui contre la deuxième zone d'appui 20 du deuxième logement 18 du voile 7 lorsque le dispositif 1 est dans un état de repos. Dans cet état de repos du dispositif 1, la deuxième bride 40 est dans la position initiale prédéterminée et le voile 7 est dans la position de repos. La face d'appui 44 de la deuxième patte de compression 43 de la deuxième bride 40 peut être en appui contre la deuxième extrémité 122 du troisième ressort 15.

L'angle d'attaque d'au moins un des ressorts 13, 14, 15, 16 par une des pattes de compression a une valeur comprise entre 0 et 20° (degrés).

Le disque d'équilibrage 41 mobile en rotation autour de l'axe de rotation X peut être unique. Le disque d'équilibrage 41 peut être monobloc. Le disque d'équilibrage 41 peut former la première patte de compression 42 et la deuxième patte de compression 43. La première patte de compression 42 et la deuxième patte de compression 43 peuvent présenter une forme en en U incliné. Cette forme est également appelée en coin de valise. La forme comprend une paroi principale, et deux parois latérales radiales à la paroi principale. L'une des parois latérales peut former le bord 46. La forme en U incliné de la première patte de compression est réalisée par un embouti.

Dans la direction axiale, on retrouve la première bride 30, le voile 7 puis la deuxième bride 40.

Le dispositif élastique 11 d'amortissement peut en outre comprendre un deuxième ressort 14 et un quatrième ressort 16. Les ressorts 13, 14, 15, 16 peuvent être agencés circonférentiellement. Les ressorts 13, 14, 15, 16 peuvent être agencés en série. Les ressorts 14, 16 peuvent être droits. Alternativement, les ressorts 14, 16 peuvent être courbes. Le deuxième ressort 14 peut être diamétralement opposé, par rapport à l'axe de rotation X, au quatrième ressort 16.

Le deuxième ressort 14 s'étend entre une première extrémité 141 et une deuxième extrémité 142. Le quatrième ressort 16 s'étend entre une première extrémité 161 et une deuxième extrémité 162.

Le premier ressort 13 et le deuxième ressort 14 peuvent être montés dans le premier logement 17 du voile 7. Le troisième ressort 15 et le quatrième ressort 16 peuvent être montés dans le deuxième logement 18 du voile 7. Les ressorts 13, 14, 15, 16 sont montés entre les bras 6 du voile 7.

Les ouvertures 12 des rondelles de guidage 9, 10 permettre le montage des ressorts 13, 14, 15, 16. Les bords desdites ouvertures sont à distance des ressorts 13, 14, 15, 16.

Le dispositif élastique 11 d'amortissement comprend en outre un élément de phasage 50 des ressorts 13, 14, 15, 16. L'élément de phasage 50 comprend deux intercalaires 51 montées, de manière diamétralement opposée, axialement entre deux disques de phasage 52. Le premier intercalaire 51 peut être monté circonférentiellement entre le premier ressort 13 et le deuxième ressort 14. Le deuxième intercalaire 51 peut être monté circonférentiellement entre le troisième ressort 15 et le quatrième ressort 16.

Chaque intercalaire 51 peut comprendre deux embouts 53. Les deux embouts peuvent être identiques. Les deux embouts peuvent former une pièce monobloc. Chacun des embouts 53 peut être en acier fritté. Chacun des embouts 53 peut comprendre une face d'appui 54 adapté pour recevoir en appui l'une des extrémités d'un ressort. Chacun des embouts 53 peut en outre comprendre un téton 55 s'étendant radialement depuis la face d'appui 54 entre une extrémité solidaire de ladite face d'appui et une extrémité libre. Le téton 55 peut être un élément de maintien adapté pour maintenir radialement l'un des ressorts. Le téton 55 peut être adapté pour maintenir radialement l'un des ressorts lorsque ce dernier est soumis à des efforts centrifuges. Le téton 55 peut en outre être adapté pour retenir axialement un des ressorts 13, 14, 15, 16. Chacun des embouts 53 peut en outre comprendre un bord 56 externe s'étendant radialement depuis l'extrémité supérieure de la face d'appui 54 entre une extrémité solidaire de ladite face d'appui et une extrémité libre. Le bord 56 peut être un élément de maintien adapté pour maintenir radialement l'un des ressorts13, 14, 15, 16. Le téton 56 peut être adapté pour maintenir radialement l'un des ressorts 13, 14, 15, 16 lorsque ce dernier est soumis à des efforts centrifuges.

Le premier embout 53 du premier intercalaire 51 peut être en contact avec la deuxième extrémité 132 du premier ressort 13 et le deuxième embout 53 du premier intercalaire peut être en contact avec la première extrémité 141 du deuxième ressort 14. Le premier embout 53 du deuxième intercalaire 51 peut être en contact avec la deuxième extrémité 152 du troisième ressort 15 et le deuxième embout 53 du deuxième intercalaire peut être en contact avec la première extrémité 161 du quatrième ressort 16.

Les disques de phasage 52 et chacun des embouts 53 peuvent être fixés ensemble par des rivets 57.

Les faces d'appui 34 de la première patte de compression 32 et la deuxième patte de compression 33 peuvent chacune être adaptés pour recevoir en appui l'une des extrémités d'un des ressorts 13, 14, 15, 16. Le téton 35 peut être adapté pour retenir axialement un des ressorts 13, 14, 15, 16. Le bord 36 peut être adapté pour retenir radialement un des ressorts 13, 14, 15, 16.

Les faces d'appui 44 de la première patte de compression 42 et la deuxième patte de compression 43 peuvent chacune être adaptés pour recevoir en appui l'une des extrémités d'un des ressorts 13, 14, 15, 16. Le téton 45 peut être adapté pour retenir axialement un des ressorts 13, 14, 15, 16. Le bord 46 peut être adapté pour retenir radialement un des ressorts 13, 14, 15, 16.

Lorsque le dispositif élastique 11 comprend les quatre ressorts 13, 14, 15, 16, la première patte de compression 42 de la deuxième bride 40 peut être agencée circonférentiellement entre la deuxième extrémité 142 du deuxième ressort 14 et le voile 7. Plus particulièrement, la première patte de compression 42 de la deuxième bride 40 peut être en appui contre la deuxième zone d'appui 20 du premier logement 17 du voile 7 lorsque le dispositif 1 est dans un état de repos. Dans cet état de repos du dispositif 1, la deuxième bride 40 est dans la position initiale prédéterminée et le voile 7 est dans la position de repos. La face d'appui 44 de la première patte de compression 42 de la deuxième bride 40 peut être en appui contre la deuxième extrémité 142 du deuxième ressort 14.

La deuxième patte de compression 43 de la deuxième bride 40 peut être agencée circonférentiellement entre la deuxième extrémité 162 du quatrième ressort 16 et le voile 7. Plus particulièrement, la deuxième patte de compression 43 de la deuxième bride 40 peut être en appui contre la deuxième zone d'appui 20 du deuxième logement 18 du voile 7 lorsque le dispositif 1 est dans un état de repos. Dans cet état de repos du dispositif 1, la deuxième bride 40 est dans la position initiale prédéterminée et le voile 7 est dans la position de repos. La face d'appui 44 de la deuxième patte de compression 43 de la deuxième bride 40 peut être en appui contre la deuxième extrémité 162 du quatrième ressort 16.

La deuxième variante de réalisation de la première bride 30' diffère de la première variante de réalisation de la première bride 30 en ce que :

La première bride 30' peut en outre comprendre deux embouts 37'. Les deux embouts 37' sont solidaires dudit unique disque d'équilibrage 31'. Le premier embout 37' peut former la première patte de compression 32. Le deuxième embout 37' peut former la deuxième patte de compression 33. L'unique disque d'équilibrage 31' peut être réalisé en métal. Chacun des embouts 37' peut être réalisé en plastique et est surmoulé sur un bras de l'unique disque d'équilibrage 31'.

Les caractéristiques de cette deuxième variante sont également valables pour la deuxième bride.

La troisième variante de réalisation de la première bride 30" diffère de la première variante de réalisation de la première bride 30 en ce que :

La première bride 30" peut comprendre deux disques d'équilibrage 31" et deux embouts 37". Le premier disque d'équilibrage peut être solidaire en rotation du deuxième disque d'équilibrage. Le premier disque d'équilibrage 31" et le deuxième disque d'équilibrage 31" sont strictement identiques. Les deux embouts 37' sont solidaires dudit unique disque d'équilibrage 31'. Le premier embout 37" peut former la première patte de compression 32. Le deuxième embout 37" peut former la deuxième patte de compression 33. Le deuxième embouti est identique au premier embouti 37". Les deux disques d'équilibrage 31" peuvent être réalisés dans une tôle emboutie. Chacun des embouts 37" peut être réalisé en acier fritté. Le premier disque d'équilibrage est riveté au deuxième disque d'équilibrage. Les emboutis 37" peuvent être riveté aux deux disques d'équilibrage 31".

Les caractéristiques de cette troisième variante sont également valables pour la deuxième bride 40".

Le premier disque d'équilibrage 31" de la première bride 30" et le premier disque d'équilibrage 41" de la deuxième bride 40" sont situées axialement d'un côté du voile 7, et le deuxième disque d'équilibrage 31" de la première bride 30" et le deuxième disque d'équilibrage 41" de la deuxième bride 40" sont situées axialement de l'autre côté du voile 7.

Le dispositif 1 d'amortissement peut en outre comprendre un système de frottement 60 destiné à dissiper l'énergie des ressorts 13, 14, 15, 16 et à éviter les phénomènes d'oscillations. Le système de frottement 60 comporte un support axial 61 fixé contre la deuxième rondelle de guidage 10 par un troisième jeu de rivets 62. Entre le support axial 61 et la deuxième rondelle de guidage 10, sont disposées : une rondelle de frottement 63, une rondelle intercalaire 64 et une rondelle élastique 65, cette dernière appliquant une charge sur la rondelle de frottement 63 par l'intermédiaire de la rondelle intercalaire 64.

Le support axial 61 peut également être fait d'une seule pièce avec la rondelle de guidage 10.

De plus, la deuxième bride 40 est prévue de l'autre côté de la deuxième rondelle de guidage 10. La deuxième bride 40 peut en outre comprendre au moins une denture. La denture est adaptée pour actionner une rondelle de frottement supplémentaire comprenant un doigt axial 49, et de préférence quatre doigts axiaux 49. La rondelle de frottement supplémentaire peut être en plastique. La rondelle de frottement supplémentaire peut être montée de sorte que les quatre doigts axiaux 49 traversent quatre rainures 8 correspondantes pratiquées dans la deuxième rondelle de guidage 10. Les quatre doigts axiaux 49 viennent s'insérer chacun dans une encoche 69 de la rondelle de frottement 63. La deuxième bride 40 est ainsi couplée en rotation à la rondelle de frottement 69.

Au moins une des rondelles de guidage 9, 10 peut comprendre une butée 21. La butées 21 est adaptée pour interdire le mouvement de la première bride 30 dans le sens indirect au-delà de la position initiale prédéterminée et pour interdire le mouvement de la deuxième bride 40 dans le sens direct au-delà de la position initiale prédéterminé. La butée 21 peut être située circonférentiellement entre la première patte de compression 32 de la première bride 30 et la deuxième patte de compression 43 de la deuxième bride 40.

La butée 21 peut être un embouti pratiqué dans l'au moins une des rondelles de guidage 9, 10.

Au moins une des rondelles de guidage 9, 10 peut comprendre deux butées 21.

Alternativement, les pattes de compression 32, 33, 42, 43 des première et deuxième bride peuvent chacune comprendre une butée 23. Les butées 23 sont adaptées pour interdire le mouvement de la première bride 30 dans le sens indirect au-delà de la position initiale prédéterminée et pour interdire le mouvement de la deuxième bride 40 dans le sens direct au-delà de la position initiale prédéterminé. Plus particulièrement, les butées 23 situées sur la première bride 30 sont adaptées pour interdire le mouvement de la première bride 30 dans le sens indirect au-delà de la position initiale prédéterminée. Les butées 23 situées sur la deuxième bride 40 sont adaptées pour interdire le mouvement de la deuxième bride 40 dans le sens direct au-delà de la position initiale prédéterminé.

Les butées 23 peuvent chacune être un épaulement pratiqué respectivement sur les pattes de compression des brides.

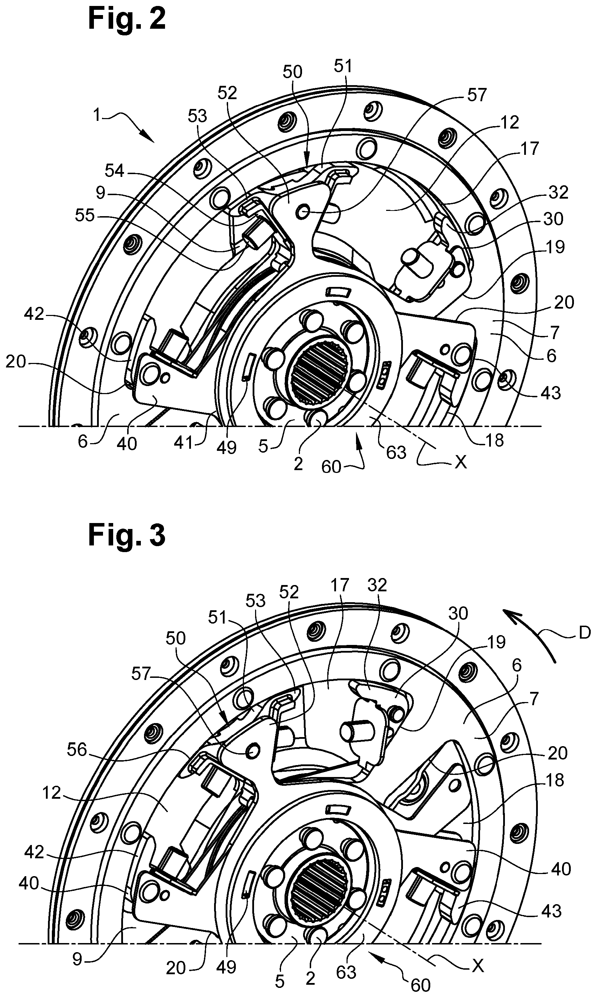

Le montage du dispositif 1 est montré sur la vue de la figure 2. Cette figure 2 montre le dispositif 1 à l'état de repos, c'est à dire lorsqu'il ne transmet aucun couple, les ressorts 13, 14, 15, 16 n'étant pas sollicités. Chaque ressort 13, 14, 15, 16 est monté, à une de ses extrémités, dans une patte de compression 32, 33, 42, 43 et, à l'autre de ses extrémités, contre un des intercalaires 51. Chaque patte de compression 32, 33, 42, 43 est appuyé uniquement sur le voile 7. Ainsi, la première paire de ressort 13, 14 est montée entre la première patte de compression 32 de la première bride 30, qui s'appuie par exemple uniquement sur la première zone d'appui 19 du premier logement 17 du voile 7, et la première patte de compression 42 de la deuxième bride 40, qui s'appuie par exemple uniquement sur la deuxième zone d'appui 20 du premier logement 17 du voile 7. En outre, la deuxième paire de ressort 15, 16 est montée entre la deuxième patte de compression 33 de la première bride 30, qui s'appuie par exemple uniquement sur la première zone d'appui 19 du deuxième logement 18 du voile 7, et la deuxième patte de compression 43 de la deuxième bride 40, qui s'appuie par exemple uniquement sur la deuxième zone d'appui 20 du deuxième logement 18 du voile 7.

Les ressorts 13, 14, 15, 16 sont ainsi, par paire, précontraints entre les premières zones d'appui 19 et les deuxièmes zones d'appui 20. Entre les ressorts 13, 14, 15, 16 de chaque paire, l'intercalaire 51, mobile en rotation autour de l'axe X grâce aux disques de phasage 52, assure la mise en série des ressorts 13, 14, 15, 16 d'une paire, ainsi que le phasage, c'est à dire la coordination angulaire, d'une paire avec l'autre.

La position angulaire de repos est la position initiale à partir de laquelle sont caractérisées :
- une première polarité de couple définie par le fait que le voile 7 se trouve dans une position angulaire, par rapport aux rondelles de guidage 9, 10, qui est située dans un secteur angulaire compris entre la position initiale prédéterminée, encore appelé position angulaire de repos, dans laquelle le voile 7 est dans la position de repos, et une position de fin de course où le voile 7 est dans la position active, c'est à dire tourné au maximum dans le sens direct, jusqu'à la mise en butée des dents 3, 6 ;
- une deuxième polarité de couple définie par le fait que le voile 7 se trouve dans une position angulaire, par rapport aux rondelles de guidage 9, 10, qui est située dans un secteur angulaire compris entre la position initiale prédéterminée, encore appelé position angulaire de repos, dans laquelle le voile 7 est dans la position de repos, et une position de fin de course où le voile 7 est dans la position active, c'est à dire tourné au maximum dans le sens indirect, jusqu'à la mise en butée des dents 3, 6.

Ces deux polarités de couple correspondent à deux modes de fonctionnement du dispositif 1 d'amortissement de torsion :
- un mode où le couple est transmis de l'élément central de transmission de couple vers l'élément périphérique de transmission de couple, correspondant par exemple, dans un véhicule, à une transmission du couple des roues vers le moteur (phases de frein moteur, par exemple) couramment dénommé « mode retro », cela correspond à la deuxième polarité de couple ;
- un mode où le couple est transmis de l'élément périphérique de transmission de couple vers l'élément central de transmission de couple, correspondant par exemple, dans un véhicule à une transmission du couple du moteur vers les roues (phases d'accélération, par exemple) couramment dénommé « mode direct », cela correspond à la première polarité de couple.

La figure 3 est relative au disque 1 dans la première polarité de couple. Par rapport à la position angulaire de repos de la figure 2, le voile 7 a tourné dans le sens direct jusqu'à sa position de fin de course (flèche D). Dans cette position, les ressorts 13, 14, 15, 16 sont comprimés entre les premières zones d'appui 19 du voile 7 et les pattes de compression 42, 43 de la deuxième bride 40.

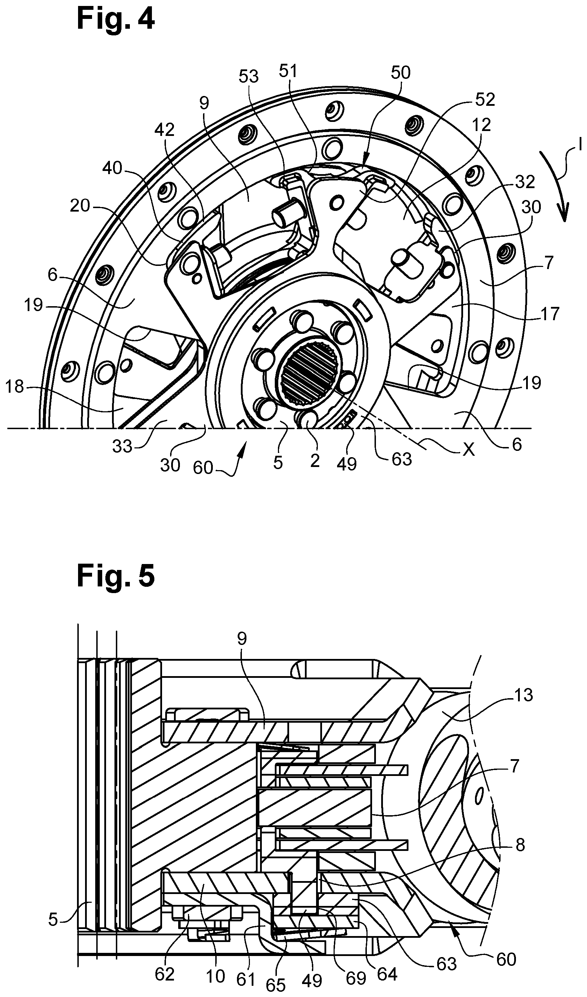

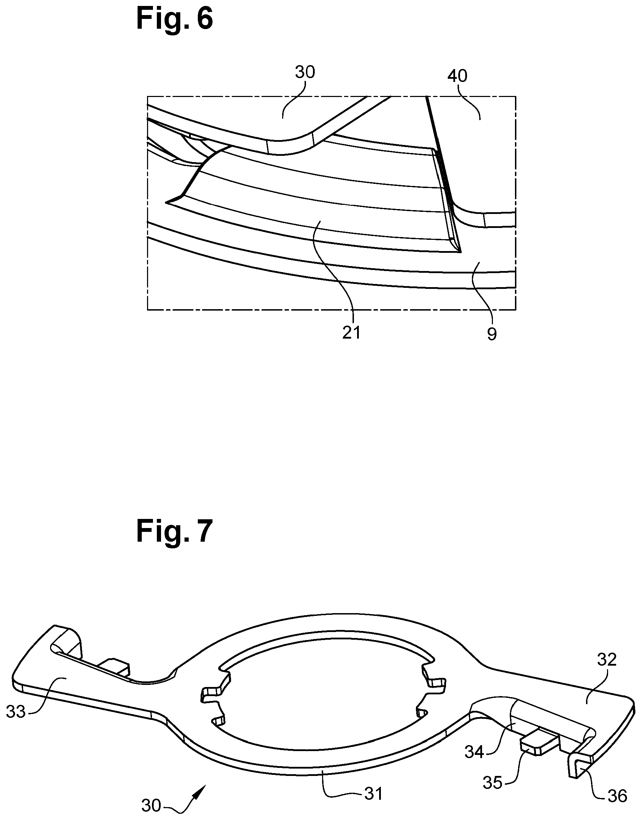

La figure 4 est relative au disque 1 dans la deuxième polarité de couple. Par rapport à la position angulaire de repos de la figure 7, le voile 7 a maintenant tourné dans le sens indirect jusqu'à sa position de fin de course (flèche I). Dans cette position, les ressorts 13, 14, 15, 16 sont comprimés entre les deuxièmes zones d'appui 20 du voile 7 et les pattes de compression 32, 33 de la première bride 30.

Selon que le dispositif 1 d'amortissement de torsion travaille selon l'une ou l'autre de ces polarités de couple, le fonctionnement du système de frottement 60 est différent.

Lorsque le dispositif 1 d'amortissement de torsion est sollicité selon la première polarité de couple, cela équivaut, sur la figure 3, à un mouvement du voile 7 selon la flèche D, la rondelle de guidage 10 restant fixe. Le voile 7 entraine alors, par les premières zones d'appui 19, les pattes de compression 32, 33 de la première bride 30 et comprime le premier ressort 13 et le troisième ressort 15 respectivement contre un des intercalaires 51, ces intercalaires 51 compriment respectivement le deuxième et le quatrième ressort contre la première et la deuxième patte de compression de la deuxième bride 40. Les deuxièmes zones d'appui 20 du voile 7 s'éloignent alors des pattes de compression 42, 43 de la deuxième bride 40. Le système de frottement 60 n'est pas en service. Comme rien ne sollicite la deuxième bride 40, cette dernière ne bouge pas.

À l'inverses, lorsque le dispositif 1 d'amortissement de torsion est sollicité selon la deuxième polarité de couple, cela équivaut à un mouvement du voile 7 selon la flèche I, la rondelle de guidage 10 restant fixe. Le voile 7 entraine alors, par les deuxièmes zones d'appui 20, les pattes de compression 42, 43 de la deuxième bride 40 et comprime le deuxième ressort 14 et le quatrième ressort 16 respectivement contre un des intercalaires 51, ces intercalaires 51 compriment respectivement le premier et le troisième ressort contre la première et la deuxième patte de compression de la première bride 30. Les premières zones d'appui 19 du voile 7 s'éloignent alors des pattes de compression 32, 33 de la première bride 30. Le système de frottement 60 est en service puisque le déplacement de la deuxième bride 40 entraine le déplacement de la rondelle de frottement 63, qui frotte donc sur la rondelle de guidage 10 et sur la rondelle intercalaire 64.

Selon la première polarité de couple, le système de frottement 60 est ainsi désactivé, tandis qu'il est activé selon la deuxième polarité de couple.

D'autres variantes de réalisation du dispositif 1 d'amortissement de torsion peuvent être mises en œuvre. Par exemple, le système dans lequel le dispositif d'amortissement de torsion est monté peut être un système quelconque au sein d'une chaine de transmission de couple qui nécessite un amortissement de torsion, tels qu'un disque d'embrayage.

## Revendications

1. Dispositif (1) d'amortissement de torsion pour une chaine de transmission de véhicule, comprenant :
- un premier élément tournant (7) de transmission d'un couple doté d'un premier logement (17), le premier logement (17) présentant une première zone d'appui (19) et une deuxième zone d'appui (20) opposée,
- un deuxième élément tournant (9, 10) de transmission du couple,
- un dispositif élastique (11) interposé entre le premier élément tournant (7) et le deuxième élément tournant (9, 10), et autorisant, lorsqu'il se déforme, une rotation relative autour d'un axe de rotation (X) entre les premier (7) et deuxième (9, 10) éléments tournants, le dispositif élastique (11) comprenant au moins un premier ressort (13) monté dans le premier logement (17), le premier ressort (13) comprenant une première extrémité (131) et une deuxième extrémité (132) opposée, le premier élément tournant (7) étant mobile entre une position de repos, dans laquelle aucun ressort du dispositif élastique n'est comprimé, et une position active dans laquelle l'au moins un ressort du dispositif élastique est comprimé,
- une première bride (30 ; 30' ; 30") comprenant une première patte de compression (32) agencée circonférentiellement entre la première extrémité (131) du premier ressort (13) et le premier élément tournant (7),
- une deuxième bride (40 ; 40") comprenant une première patte de compression (42) agencée circonférentiellement entre la deuxième extrémité (132) du premier ressort (13) et le premier élément tournant (7),
dans lequel le premier élément tournant (7) déplace la première extrémité (131) du premier ressort (13) vers la deuxième extrémité du premier ressort, via la première patte de compression de la première bride (30 ; 30' ; 30"),
lorsque ledit premier élément tournant (7) est mobile en rotation dans le sens direct depuis la position de repos,
et dans lequel le premier élément tournant (7) déplace la deuxième extrémité (132) du premier ressort (13) vers la première extrémité du premier ressort, via la première patte de compression de la deuxième bride (40 ; 40"), lorsque ledit premier élément tournant (7) est mobile en rotation dans le sens indirect depuis la position de repos,
la première patte de compression (32) de la première bride (30) étant en appui contre la première zone d'appui (19) du premier logement (17) dans la position de repos.

2. Dispositif (1) selon la revendication précédente,
**caractérisé en ce que** la première patte de compression (32) de la première bride (30 ; 30' ; 30") comprend au moins un élément de maintien (35, 55, 36, 56) adapté pour maintenir radialement le premier ressort (13).

3. Dispositif (1) selon la revendication 1 ou la revendication 2, **caractérisé en ce que** le dispositif élastique (11) comprend en outre un deuxième ressort (14) monté dans le premier logement (17), le deuxième ressort (14) comprenant une première extrémité (141) et une deuxième extrémité (142) opposée,
**en ce que** la première patte de compression (42) de la deuxième bride (40 ; 40") est agencée circonférentiellement entre la deuxième extrémité (142) du deuxième ressort (14) et le premier élément tournant (7),
et **en ce que** le premier élément tournant (7) déplace la deuxième extrémité (142) du deuxième ressort (14) vers la première extrémité du deuxième ressort, via la première patte de compression de la deuxième bride (40 ; 40"), lorsque ledit premier élément tournant (7) est mobile en rotation dans le sens indirect depuis la position de repos.

4. Dispositif (1) selon la revendication précédente,
**caractérisé en ce que** le premier ressort (13) et le deuxième ressort (14) sont agencés en série par l'intermédiaire d'un élément de phasage (50) reliant la deuxième extrémité du premier ressort (13) et la première extrémité du deuxième ressort (14).

5. Dispositif (1) selon la revendication 3 ou la revendication 4, **caractérisé en ce que** le premier élément tournant (7) est doté d'un deuxième logement (18), le deuxième logement (18) présentant une première zone d'appui (19) et une deuxième zone d'appui (20) opposée,
**en ce que** le dispositif élastique (11) comprend en outre un troisième ressort (15), opposé radialement au premier ressort (13), et un quatrième ressort (16), opposé radialement au deuxième ressort (14), les troisième et quatrième ressorts étant montés dans le deuxième logement (18) et comprenant chacun une première extrémité (151, 161) et une deuxième extrémité (152, 162) opposée,
**en ce que** la première bride (30 ; 30' ; 30") et la deuxième bride (40 ; 40") comprennent chacun une deuxième patte de compression (33, 43) agencée circonférentiellement entre le premier élément tournant (7) et, respectivement, la première extrémité (151) du troisième ressort (15) ou la deuxième extrémité du quatrième ressort (16),
et **en ce que** le premier élément tournant (7) déplace la première extrémité (151) du troisième ressort (15) vers la deuxième extrémité du troisième ressort, via la deuxième patte de compression de la première bride (30 ; 30' ; 30"), lorsque ledit premier élément tournant (7) est mobile en rotation dans le sens direct depuis la position de repos, et qu'il déplace la deuxième extrémité (162) du quatrième ressort (16) vers la première extrémité du quatrième ressort, via la deuxième patte de compression de la deuxième bride (40 ; 40"), lorsque ledit premier élément tournant (7) est mobile en rotation dans le sens indirect depuis la position de repos,
la deuxième patte de compression (33) de la première bride (30) étant en appui contre la première zone d'appui (19) du deuxième logement (18) dans la position de repos.

6. Dispositif (1) selon la revendication précédente,
**caractérisé en ce que** le deuxième élément tournant (9, 10) comprend une butée (21) circonférentielle, ou **en ce que** la première patte de compression (32) de la première bride (30 ; 30' ; 30") et la deuxième patte de compression (43) de la deuxième bride (40 ; 40") comprenne chacune une butée (23), la ou lesdites butées étant respectivement adaptées pour interdire le mouvement de la première bride (30 ; 30' ; 30") dans le sens indirect au-delà d'une position initiale prédéterminée et pour interdire le mouvement de la deuxième bride (40 ; 40") dans le sens direct au-delà d'une position initiale prédéterminé.

7. Dispositif (1) selon l'une quelconque des revendications précédentes, **caractérisé en ce que** la première bride (30 ; 30') et/ou la deuxième bride (40) comprend un unique disque d'équilibrage (31, 41) monobloc mobile en rotation autour de l'axe de rotation (X) et formant la première patte de compression
ou comprend un unique disque d'équilibrage (31') mobile en rotation autour de l'axe de rotation (X) et un embout (37'), solidaire dudit unique disque d'équilibrage (31'), formant la première patte de compression (32, 42).

8. Dispositif (1) selon l'une quelconque des revendications précédentes, **caractérisé en ce que** la première bride (30 ; 30' ; 30") et la deuxième bride (40 ; 40") sont situées axialement de part et d'autre du premier élément tournant (7).

9. Dispositif (1) selon l'une quelconque des revendications 1 à 6, **caractérisé en ce que** la première bride (30") et/ou la deuxième bride (40") comprend un premier disque d'équilibrage, un deuxième disque d'équilibrage (31", 41"), solidaire en rotation du premier disque d'équilibrage, et un embout (37") formant la première patte de compression (32, 42).

10. Dispositif (1) selon la revendication précédente,
**caractérisé en ce que** le premier disque d'équilibrage de la première bride (30") et le premier disque d'équilibrage de la deuxième bride (40") sont situées axialement d'un côté du premier élément tournant (7), et **en ce que** le deuxième disque d'équilibrage de la première bride (30") et le deuxième disque d'équilibrage de la deuxième bride (40") sont situées axialement de l'autre côté du premier élément tournant (7).

11. Dispositif (1) selon l'une quelconque des revendications précédentes, **caractérisé en ce que** l'un parmi le premier élément tournant (7) et le deuxième élément tournant (9, 10) est couplé en rotation à un moyeu (5), la première bride et/ou la deuxième bride étant guidée en rotation par ledit moyeu.

12. Dispositif (1) selon l'une quelconque des revendications précédentes, **caractérisé en ce que** le dispositif comprend en outre un système de frottement (60) comprenant une rondelle de frottement (63), agencée pour frotter directement ou indirectement contre le premier ou le deuxième élément tournant, et entraînée en rotation par la première ou la deuxième bride.

## Patentansprüche

1. Torsionsdämpfungsvorrichtung (1) für einen Fahrzeugantriebsstrang, umfassend:
- ein erstes drehendes Element (7) zur Drehmomentübertragung, das mit einem ersten Gehäuse (17) versehen ist, wobei das erste Gehäuse (17) eine erste Abstützzone (19) und eine gegenüberliegende zweite Abstützzone (20) aufweist,
- ein zweites drehendes Element (9, 10) zur Drehmomentübertragung,
- eine elastische Vorrichtung (11), die zwischen dem ersten drehenden Element (7) und dem zweiten drehenden Element (9, 10) angeordnet ist und bei ihrer Verformung eine relative Drehung um eine Drehachse (X) zwischen dem ersten (7) und dem zweiten (9, 10) drehenden Element ermöglicht, wobei die elastische Vorrichtung (11) mindestens eine erste Feder (13) umfasst, die in dem ersten Gehäuse (17) montiert ist, wobei die erste Feder (13) ein erstes Ende (131) und ein gegenüberliegendes zweites Ende (132) umfasst, wobei das erste drehende Element (7) zwischen einer Ruheposition, in der keine Feder der elastischen Vorrichtung komprimiert ist, und einer aktiven Position beweglich ist, in der die mindestens eine Feder der elastischen Vorrichtung komprimiert ist,
- einen ersten Flansch (30; 30'; 30") mit einer ersten Kompressionszunge (32), die in Umfangsrichtung zwischen dem ersten Ende (131) der ersten Feder (13) und dem ersten drehenden Element (7) angeordnet ist,
- einen zweiten Flansch (40; 40') mit einer ersten Kompressionszunge (42), die in Umfangsrichtung zwischen dem zweiten Ende (132) der ersten Feder (13) und dem ersten drehenden Element (7) angeordnet ist,
wobei das erste drehende Element (7) das erste Ende (131) der ersten Feder (13) über die erste Kompressionszunge des ersten Flansches (30; 30'; 30") in Richtung des zweiten Endes der ersten Feder bewegt, wenn sich das erste drehende Element (7) in Vorwärtsdrehrichtung aus der Ruheposition heraus dreht,
und wobei das erste drehende Element (7) das zweite Ende (132) der ersten Feder (13) über die erste Kompressionszunge des zweiten Flansches (40; 40') in Richtung des ersten Endes der ersten Feder bewegt, wenn sich das erste drehende Element (7) in Rückwärtsdrehrichtung aus der Ruheposition heraus dreht,
wobei die erste Kompressionszunge (32) des ersten Flansches (30) in der Ruheposition an der ersten Abstützzone (19) des ersten Gehäuses (17) anliegt.

2. Vorrichtung (1) nach dem vorhergehenden Anspruch, **dadurch gekennzeichnet, dass** die erste Kompressionszunge (32) des ersten Flansches (30; 30'; 30") mindestens ein Halteelement (35, 55, 36, 56) umfasst, das dazu geeignet ist, die erste Feder (13) radial zu halten.

3. Vorrichtung (1) nach Anspruch 1 oder Anspruch 2, **dadurch gekennzeichnet, dass** die elastische Vorrichtung (11) ferner eine zweite Feder (14) umfasst, die in dem ersten Gehäuse (17) montiert ist, wobei die zweite Feder (14) ein erstes Ende (141) und ein gegenüberliegendes zweites Ende (142) umfasst, dass die erste Kompressionszunge (42) des zweiten Flansches (40; 40") in Umfangsrichtung zwischen dem zweiten Ende (142) der zweiten Feder (14) und dem ersten drehenden Element (7) angeordnet ist, und dass das erste drehende Element (7) das zweite Ende (142) der zweiten Feder (14) über die erste Kompressionszunge des zweiten Flansches (40; 40") in Richtung des ersten Endes der zweiten Feder bewegt, wenn sich das erste drehende Element (7) in Rückwärtsdrehrichtung aus der Ruheposition heraus dreht.

4. Vorrichtung (1) nach dem vorhergehenden Anspruch, **dadurch gekennzeichnet, dass** die erste Feder (13) und die zweite Feder (14) über ein Phasierungselement (50) in Reihe angeordnet sind, das das zweite Ende der ersten Feder (13) und das erste Ende der zweiten Feder (14) verbindet.

5. Vorrichtung (1) nach Anspruch 3 oder Anspruch 4, **dadurch gekennzeichnet, dass** das erste drehende Element (7) mit einem zweiten Gehäuse (18) versehen ist, wobei das zweite Gehäuse (18) eine erste Abstützzone (19) und eine gegenüberliegende zweite Abstützzone (20) aufweist, dass die elastische Vorrichtung (11) ferner eine dritte Feder (15), die der ersten Feder (13) radial gegenüberliegt, und eine vierte Feder (16), die der zweiten Feder (14) radial gegenüberliegt, umfasst, wobei die dritte und die vierte Feder in dem zweiten Gehäuse (18) montiert sind und jeweils ein erstes Ende (151, 161) und ein gegenüberliegendes zweites Ende (152, 162) umfassen,
dass der erste Flansch (30; 30'; 30') und der zweite Flansch (40; 40") jeweils eine zweite Kompressionszunge (33, 43) umfassen, die in Umfangsrichtung zwischen dem ersten drehenden Element (7) und jeweils dem ersten Ende (151) der dritten Feder (15) oder dem zweiten Ende der vierten Feder (16) angeordnet ist,
und dass das erste drehende Element (7) das erste Ende (151) der dritten Feder (15) über die zweite Kompressionszunge des ersten Flansches (30; 30'; 30") in Richtung des zweiten Endes der dritten Feder bewegt, wenn sich das erste drehende Element (7) in Vorwärtsdrehrichtung aus der Ruheposition heraus dreht, und das zweite Ende (162) der vierten Feder (16) über die zweite Kompressionszunge des zweiten Flansches (40; 40") in Richtung des ersten Endes der vierten Feder bewegt, wenn sich das erste drehende Element (7) in Rückwärtsdrehrichtung aus der Ruheposition heraus dreht,
wobei die zweite Kompressionszunge (33) des ersten Flansches (30) in der Ruheposition an der ersten Abstützzone (19) des zweiten Gehäuses (18) anliegt.

6. Vorrichtung (1) nach dem vorhergehenden Anspruch, **dadurch gekennzeichnet, dass** das zweite drehende Element (9, 10) einen Umfangsanschlag (21) umfasst, oder dass die erste Kompressionszunge (32) des ersten Flansches (30; 30'; 30") und die zweite Kompressionszunge (43) des zweiten Flansches (40; 40") jeweils einen Anschlag (23) umfassen, wobei der oder die genannten Anschläge jeweils dazu geeignet sind, die Bewegung des ersten Flansches (30; 30'; 30") in Rückwärtsdrehrichtung über eine vorbestimmte Ausgangsposition hinaus zu verhindern und die Bewegung des zweiten Flansches (40; 40') in Vorwärtsdrehrichtung über eine vorbestimmte Ausgangsposition hinaus zu verhindern.

7. Vorrichtung (1) nach einem der vorhergehenden Ansprüche, **dadurch gekennzeichnet, dass** der erste Flansch (30; 30') und/oder der zweite Flansch (40) eine einzige einstückige Ausgleichsscheibe (31, 41) umfasst, die um die Drehachse (X) drehbar ist und die erste Kompressionszunge bildet,
oder eine einzige Ausgleichsscheibe (31') umfasst, die um die Drehachse (X) drehbar ist, sowie ein Endstück (37'), das mit der einzigen Ausgleichsscheibe (31') fest verbunden ist und die erste Kompressionszunge (32, 42) bildet.

8. Vorrichtung (1) nach einem der vorhergehenden Ansprüche, **dadurch gekennzeichnet, dass** der erste Flansch (30; 30'; 30") und der zweite Flansch (40; 40') axial auf beiden Seiten des ersten drehenden Elements (7) angeordnet sind.

9. Vorrichtung (1) nach einem der Ansprüche 1 bis 6, **dadurch gekennzeichnet, dass** der erste Flansch (30") und/oder der zweite Flansch (40") eine erste Ausgleichsscheibe, eine zweite Ausgleichsscheibe (31", 41"), die drehfest mit der ersten Ausgleichsscheibe verbunden ist, und ein Endstück (37") umfasst, das die erste Kompressionszunge (32, 42) bildet.

10. Vorrichtung (1) nach dem vorhergehenden Anspruch, **dadurch gekennzeichnet, dass** die erste Ausgleichsscheibe des ersten Flansches (30") und die erste Ausgleichsscheibe des zweiten Flansches (40") axial auf einer Seite des ersten drehenden Elements (7) angeordnet sind, und dass die zweite Ausgleichsscheibe des ersten Flansches (30") und die zweite Ausgleichsscheibe des zweiten Flansches (40") axial auf der anderen Seite des ersten drehenden Elements (7) angeordnet sind.

11. Vorrichtung (1) nach einem der vorhergehenden Ansprüche, **dadurch gekennzeichnet, dass** eines von dem ersten drehenden Element (7) und dem zweiten drehenden Element (9, 10) drehfest mit einer Nabe (5) gekoppelt ist, wobei der erste Flansch und/oder der zweite Flansch durch die genannte Nabe drehgeführt wird.

12. Vorrichtung (1) nach einem der vorhergehenden Ansprüche, **dadurch gekennzeichnet, dass** die Vorrichtung ferner ein Reibungssystem (60) umfasst, das eine Reibscheibe (63) umfasst, die dazu angeordnet ist, direkt oder indirekt gegen das erste oder das zweite drehende Element zu reiben, und die durch den ersten oder den zweiten Flansch in Drehung versetzt wird.

## Claims

1. Torsion damping device (1) for a vehicle transmission chain, comprising:
- a first rotating element (7) for transmitting a torque provided with a first housing (17), the first housing (17) having a first bearing zone (19) and an opposing second bearing zone (20),
- a second rotating element (9, 10) for transmitting the torque,
- an elastic device (11) interposed between the first rotating element (7) and the second rotating element (9, 10), and allowing, when it deforms, a relative rotation around a rotation axis (X) between the first (7) and second (9, 10) rotating elements, the elastic device (11) comprising at least one first spring (13) mounted in the first housing (17), the first spring (13) comprising a first end (131) and an opposing second end (132), the first rotating element (7) being movable between a rest position, in which no spring of the elastic device is compressed, and an active position in which the at least one spring of the elastic device is compressed,
- a first flange (30; 30'; 30") comprising a first compression tab (32) arranged circumferentially between the first end (131) of the first spring (13) and the first rotating element (7),
- a second flange (40; 40') comprising a first compression tab (42) arranged circumferentially between the second end (132) of the first spring (13) and the first rotating element (7),
wherein the first rotating element (7) moves the first end (131) of the first spring (13) toward the second end of the first spring, via the first compression tab of the first flange (30; 30'; 30"), when said first rotating element (7) is rotatably movable in the forward direction from the rest position,
and wherein the first rotating element (7) moves the second end (132) of the first spring (13) toward the first end of the first spring, via the first compression tab of the second flange (40; 40'), when said first rotating element (7) is rotatably movable in the reverse direction from the rest position,
the first compression tab (32) of the first flange (30) being in abutment against the first bearing zone (19) of the first housing (17) in the rest position.

2. Device (1) according to the preceding claim, **characterized in that** the first compression tab (32) of the first flange (30; 30'; 30") comprises at least one retaining element (35, 55, 36, 56) adapted to radially retain the first spring (13).

3. Device (1) according to Claim 1 or Claim 2, **characterized in that** the elastic device (11) further comprises a second spring (14) mounted in the first housing (17), the second spring (14) comprising a first end (141) and an opposing second end (142), **in that** the first compression tab (42) of the second flange (40; 40") is arranged circumferentially between the second end (142) of the second spring (14) and the first rotating element (7), and **in that** the first rotating element (7) moves the second end (142) of the second spring (14) toward the first end of the second spring, via the first compression tab of the second flange (40; 40"), when said first rotating element (7) is rotatably movable in the reverse direction from the rest position.

4. Device (1) according to the preceding claim, **characterized in that** the first spring (13) and the second spring (14) are arranged in series by means of a phasing element (50) connecting the second end of the first spring (13) and the first end of the second spring (14).

5. Device (1) according to Claim 3 or Claim 4, **characterized in that** the first rotating element (7) is provided with a second housing (18), the second housing (18) having a first bearing zone (19) and an opposing second bearing zone (20), **in that** the elastic device (11) further comprises a third spring (15), radially opposite the first spring (13), and a fourth spring (16), radially opposite the second spring (14), the third and fourth springs being mounted in the second housing (18) and each comprising a first end (151, 161) and an opposing second end (152, 162),
**in that** the first flange (30; 30'; 30') and the second flange (40; 40") each comprise a second compression tab (33, 43) arranged circumferentially between the first rotating element (7) and, respectively, the first end (151) of the third spring (15) or the second end of the fourth spring (16),
and **in that** the first rotating element (7) moves the first end (151) of the third spring (15) toward the second end of the third spring, via the second compression tab of the first flange (30; 30'; 30"), when said first rotating element (7) is rotatably movable in the forward direction from the rest position, and moves the second end (162) of the fourth spring (16) toward the first end of the fourth spring, via the second compression tab of the second flange (40; 40"), when said first rotating element (7) is rotatably movable in the reverse direction from the rest position,
the second compression tab (33) of the first flange (30) being in abutment against the first bearing zone (19) of the second housing (18) in the rest position.

6. Device (1) according to the preceding claim, **characterized in that** the second rotating element (9, 10) comprises a circumferential stop (21), or **in that** the first compression tab (32) of the first flange (30; 30'; 30") and the second compression tab (43) of the second flange (40; 40") each comprise a stop (23), said stop or stops being respectively adapted to prevent the movement of the first flange (30; 30'; 30") in the reverse direction beyond a predetermined initial position and to prevent the movement of the second flange (40; 40') in the forward direction beyond a predetermined initial position.

7. Device (1) according to any one of the preceding claims, **characterized in that** the first flange (30; 30') and/or the second flange (40) comprises a single one-piece balancing disc (31, 41) rotatably movable about the rotation axis (X) and forming the first compression tab,
or comprises a single balancing disc (31') rotatably movable about the rotation axis (X) and a tip (37'), integral with said single balancing disc (31'), forming the first compression tab (32, 42).

8. Device (1) according to any one of the preceding claims, **characterized in that** the first flange (30; 30'; 30") and the second flange (40; 40') are located axially on either side of the first rotating element (7).

9. Device (1) according to any one of Claims 1 to 6, **characterized in that** the first flange (30") and/or the second flange (40") comprises a first balancing disc, a second balancing disc (31", 41"), rotationally integral with the first balancing disc, and a tip (37") forming the first compression tab (32, 42).

10. Device (1) according to the preceding claim, **characterized in that** the first balancing disc of the first flange (30") and the first balancing disc of the second flange (40") are located axially on one side of the first rotating element (7), and **in that** the second balancing disc of the first flange (30") and the second balancing disc of the second flange (40") are located axially on the other side of the first rotating element (7).

11. Device (1) according to any one of the preceding claims, **characterized in that** one of the first rotating element (7) and the second rotating element (9, 10) is rotationally coupled to a hub (5), the first flange and/or the second flange being rotationally guided by said hub.

12. Device (1) according to any one of the preceding claims, **characterized in that** the device further comprises a friction system (60) comprising a friction washer (63), arranged to rub directly or indirectly against the first or second rotating element, and driven in rotation by the first or second flange.
